# EUROPEAN PATENT SPECIFICATION

(11) **EP 3 522 285 B1**
(45) Date of publication and mention of the grant of the patent: **15.04.2026**
(21) Application number: 17856584.2
(22) Date of filing: 29.08.2017
(51) Int. Cl.: H01M 10/0525, H01M 4/131, H01M 4/136, H01M 4/485, H01M 4/58, H01M 10/0587, H01M 50/538

(54) **LITHIUM SECONDARY BATTERY**
LITHIUMSEKUNDÄRBATTERIE
PILE RECHARGEABLE AU LITHIUM

(30) Priority: 28.09.2016 KR 20160125025; 31.07.2017 KR 20170096954
(43) Date of publication of application: 07.08.2019
(73) Proprietor: Grinergy Co.,Ltd., Seoul 08503 (KR); Titanvolt Industries Limited, Gateshead, Tyne & Wear, NE11 0EH (GB)
(72) Inventor: BANG, Sung Yong, Troy, Michigan 48084 (US)
(74) Representative: Simmons & Simmons LLP (Munich)
(86) International application number: PCT/KR2017/009397
(87) International publication number: WO 2018/062698

(56) References cited:
- WO-A1-2015/140952
- JP-A- 2005 129 433
- JP-A- 2012 043 682
- JP-A- 2016 033 898
- KR-A- 20090 051 132
- KR-A- 20090 051 132
- KR-A- 20120 123 851
- KR-A- 20150 029 544
- US-A1- 2014 363 712
- US-A1- 2015 079 448

## Description

### [Technical Field]

The present invention relates to a lithium secondary battery, and particularly, to a lithium secondary battery having excellent charging/discharging characteristics.

### [Background Art]

With the development of electric and electronic technologies, the use of portable electronic products, which are small in size and light in weight and have various functions, is rapidly increased. In general, a battery is used as an electric power supply device for operating the portable electronic product, and a secondary battery, which may be reused by being recharged, is often used.

Examples of the secondary battery in the related art include a lead acid battery, a nickel cadmium (NiCd) battery, a nickel hydrogen (NiMH) battery, a lithium ion (Li-ion) battery, a lithium ion polymer (Li-ion polymer) battery, and a lithium metal battery. The secondary battery offers both economic and environmental advantages in contrast to a primary battery which is discarded after being used once.

The lithium secondary battery in the related art has positive and negative electrodes each of which has an active material that reversibly intercalates and deintercalates lithium ions, a separation membrane which electrically separates the positive and negative electrodes, and an electrolyte which is interposed between the positive and negative electrodes, and the lithium secondary battery is charged and discharged as the lithium ions move between the electrodes.

Examples of representative negative electrode active materials include graphite, silicon, silicon composite, and lithium titanate (LTO), and examples of representative positive electrode active materials include lithium cobalt oxide (LCO), lithium nickel manganese cobalt oxide (NMC), lithium nickel oxide (NCA), and lithium iron phosphate (LFP).

The LTO, which is one of the negative electrode active materials, has a spinel structure and a 3D shape, thus allows free intercalation/deintercalation of lithium ions, and has excellent charging characteristics in comparison with general one-dimensional graphite intercalation.

The LTO has electric potential of 1.55 V and thus causes no lithium plating, such that there is no safety problem caused by the lithium plating resulting from degradation in cycle life testing that is found in a graphite negative electrode. The LTO doesn't have a solid electrolyte interphase (SEI) film and thus has a lower SEI film resistance value than graphite, such that the LTO has excellent charging/discharging characteristics at a low temperature in addition to the aforementioned excellent structural characteristics.

In addition, a crystal structure of the LTO less changes during the charging/discharging, and therefore an electrode does not expand or shrink during the charging/discharging but maintains a constant thickness thereof, such that a microstructure of the electrode is constantly maintained without cracks or delamination unlike graphite electrode, and as a result, the LTO exhibits superior cycle life performance in comparison with graphite. Here, the electrode refers to a structure including an active material, a binder, and a conductive agent.

In addition, the LTO has superior thermal and mechanical stability in comparison with graphite. When an accident happens by an external short-circuit or internal short-circuit which are most common battery failure mode, LTO material itself loses conductivity and transferred to more ceramic-like from the semi-conducting materials, and thus has a mechanism that autonomously makes an cell safe. Therefore, it is possible to prevent ignition or explosion of the cell even in the worst situation.

Meanwhile, in the case of the lithium secondary battery has produced using a graphite material as a negative electrode, there is a concern about lithium plating, and thereby there is only a method of discarding the lithium secondary battery and then recycling a small amount of metal when recycling the lithium secondary battery. However, in the case of the lithium secondary battery made based on an LTO negative electrode, there is no concern of lithium plating, and therefore various methods may be applied to safely and efficiently recycle desired metals when the lithium secondary battery is recycled. The lithium secondary battery made based on the LTO negative electrode has excellent life cycle performance and environmental merits when we us LFP as a positive electrode because the lithium secondary battery does not include deleterious metal unlike NMC, NCA, and LCO.

However, the LTO anode based lithium secondary battery has a lower energy density due to the low specific capacity of LTO materials and low cell voltage caused by higher potential of LTO compared to the Graphite based lithium secondary battery..

Furthermore, a single-cell battery made by coupling a graphite negative electrode and one of various types of positive electrodes, for example, a single-cell battery including an LCO positive electrode and a graphite negative electrode has an average voltage of approximately 3.8 V, and a single-cell battery including an NMC positive electrode and a graphite negative electrode has an average voltage of approximately 3.7 V.

In contrast, a single-cell battery made by coupling a LTO negative electrode and one of various types of positive electrodes, for example, a single-cell battery including an LCO positive electrode and an LTO negative electrode has an average voltage of approximately 2.4 V, and a single-cell battery including an NMC positive electrode and an LTO negative electrode has an average voltage of approximately 2.3 V.

As described above, the single-cell battery made based on the LTO negative electrode has a low voltage because of high negative electrode electric potential of the LTO, and as a result, it is difficult to provide an operational voltage window of a general small-sized battery.

WO 2015/140952 A1 discloses a nonaqueous electrolyte secondary battery battery which is provided with: a first electrode group and a second electrode group, each of which is obtained by laminating a positive electrode, a negative electrode and a separator; a nonaqueous electrolyte; an outer casing material in which the first electrode group, the second electrode group and the nonaqueous electrolyte are sealed; a positive electrode lead which is connected to the first electrode group; a negative electrode lead which is connected to the second electrode group; and a connection lead which connects the first electrode group and the second electrode group with each other. It is further disclosed that the outer casing material is provided with: a first container part which contains the first electrode group; a second container part which contains the second electrode group; and a connection part which connects the first container part and the second container part with each other.

KR 2009 0029544 A discloses a secondary battery including two unit cells, where the electrode tab on one side of the unit cells protrudes outside the case and the electrode tab on the opposite side is connected to each other in a series connection method, and the battery case is each formed with a receiving portion. It consists of a first member and a second member, and includes a surplus portion for a diaphragm extending from one side of the first member or the second member to physically separate the electrolyte of the unit cells, and is provided in the case storage portions. A secondary battery is disclosed to be provided in which the internal electrode tab connection part is heat-sealed to the case sealing part while the surplus part for the diaphragm is positioned between the respective mounted unit cells.

### [Disclosure]

### [Technical Problem]

The present invention has been contrived in consideration of the aforementioned situations, and an object of the present invention is to provide a lithium secondary battery which is made based on an LTO negative electrode, has excellent charging/discharging characteristics, a prolonged lifespan, and safety in comparison with a battery in the related art, has a new type of jelly roll serial connection structure, and has a rated voltage available for both small-sized battery and large format battery to reduce the cell cost like packaging and lead tabs.

### [Technical Solution]

The present invention is defined in the appended claims.

To achieve the aforementioned object, a lithium secondary battery according to an exemplary embodiment of the present invention includes: a first electrode assembly which includes a positive electrode plate having a positive electrode tab that is used as a positive electrode terminal, a negative electrode plate having a serial connection tab, and a separation membrane provided between the positive electrode plate and the negative electrode plate; and a second electrode assembly which includes a positive electrode plate having a serial connection tab, a negative electrode plate having a negative electrode tab that is used as a negative electrode terminal, and a separation membrane provided between the positive electrode plate and the negative electrode plate, and which is stacked with an electrode assembly separation membrane so as to be insulated from the first electrode assembly; and a casing accommodating the stacked first electrode assembly, second electrode assembly, and electrode assembly separation membrane interposed therebetween, where the serial connection tab of the first electrode assembly is connected to the serial connection tab of the second electrode assembly, and the first electrode assembly and the second electrode assembly are connected in series by the serial connection tabs, wherein each of the each of the positive electrode plates of the first electrode assembly and the second electrode assembly has a positive electrode current collector onto which an LFP positive electrode active materials or NMC positive electrode active materials are applied, each of the negative electrode plates of the first electrode assembly and the second electrode assembly has a negative electrode current collector onto which an LTO negative active material is applied, an electrolyte is provided in the casing, the first electrode assembly and the second electrode assembly are configured to be self-balanced by using an positive electrode active material and an negative electrode active material, and each of the first electrode assembly and the second electrode assembly is to form a jelly roll structure, where the serial connection tab and the positive electrode tab extends on a same first side of the first electrode assembly.

The multiple first electrode assemblies and the multiple second electrode assemblies may be provided so as to increase a battery capacity, the multiple first electrode assemblies may be stacked with the separation membranes interposed therebetween so as to form a jelly roll structure, and the multiple second electrode assemblies may be stacked with the separation membranes interposed therebetween so as to form a jelly roll structure. The first electrode assembly may be disposed to be stacked on the second electrode assembly, and the lithium secondary battery may further include a quadrangular casing that accommodates the first and second electrode assemblies.

The first electrode assembly may be deformed in a cylindrical shape so as to constitute an inner cylindrical shape, the second electrode assembly may surround an outer circumference of the first electrode assembly so as to constitute an outer cylindrical shape, and the lithium secondary battery may further include a cylindrical casing that accommodates the first and second electrode assemblies.

No positive electrode active material may be applied onto the positive electrode tab of the first electrode assembly, and the positive electrode tab of the first electrode assembly may extend from one side of the positive electrode current collector of the first electrode assembly, may be connected to a positive electrode lead tab, and may be used as the positive electrode terminal.

No negative electrode active material may be applied onto the serial connection tab of the first electrode assembly, and the serial connection tab of the first electrode assembly may extend from one side of the negative electrode current collector of the first electrode assembly.

The serial connection tab of the first electrode assembly and the positive electrode tab of the first electrode assembly may be configured so as not to overlap each other.

No positive electrode active material may be applied onto the serial connection tab of the second electrode assembly, and the serial connection tab of the second electrode assembly may extend from one side of the positive electrode current collector of the second electrode assembly.

The serial connection tab of the first electrode assembly and the serial connection tab of the second electrode assembly may overlap each other so as to electrically connect the first electrode assembly and the second electrode assembly.

No LTO negative electrode active material may be applied onto the negative electrode tab of the second electrode assembly, and the negative electrode tab of the second electrode assembly may extend from one side of the negative electrode current collector of the second electrode assembly, may be connected to a negative electrode lead tab, and may be used as the negative electrode terminal.

The positive electrode tab of the first electrode assembly and the negative electrode tab of the second electrode assembly may be configured so as not to overlap each other.

Each of the negative electrode plate of the first electrode assembly, the positive electrode plate of the first electrode assembly, the negative electrode plate of the second electrode assembly, and the negative electrode plate of the second electrode assembly may include aluminum, stainless steel, or copper.

### [Advantageous Effects]

Therefore, according to the lithium secondary battery according to the exemplary embodiment of the present invention, the two electrode assemblies are connected by a new type of serial structure, such that the LTO negative electrode, which was restricted in use because of a low voltage thereof, may be used, and thus the lithium secondary battery may has better charging and low-temperature characteristics than a secondary battery made based on graphite in the related art and may solve a problem with safety. Accordingly, the lithium secondary battery may have wide usability in an extreme environment and may have a rated voltage available for a consumer electronic battery.

In addition, since the two electrode assemblies use the LFP positive electrode and the LTO negative electrode, it is possible to solve problems of oxidation of an electrolyte due to a relatively low charging voltage(4.2 ~ 4.3V, most carbonate solvents starts oxidation around more than 4.5V) and imbalance between the electrode assemblies which occur when the two electrode assemblies or jelly rolls are connected in series in a single cell.

### [Description of Drawings]

FIG. 1 is a top plan view of a lithium secondary battery according to an exemplary embodiment of the present invention.
FIGS. 2A, 2B, and 2C are first exploded top plan views illustrating a state in which a first electrode assembly of the lithium secondary battery according to the exemplary embodiment of the present invention is disassembled.
FIG. 3 is a partially cross-sectional view of the first electrode assembly in FIGS. 2A, 2B, and 2C.
FIG. 4 is a second exploded top plan view illustrating a state in which a second electrode assembly of the lithium secondary battery according to the exemplary embodiment of the present invention is disassembled.
FIG. 5 is a partially cross-sectional view of the second electrode assembly in FIGS. 4A, 4B, and 4C.
FIG. 6 is a top plan view of the lithium secondary battery which has an angular (pouch or metal casing) shape and includes the first electrode assembly having a stacking structure and the second electrode assembly having a stacking structure according to the exemplary embodiment of the present invention.
FIGS. 7A, 7B, and 7C are cross-sectional views and perspective views of the lithium secondary battery which has an angular (pouch or metal casing) shape and includes the first electrode assembly having a winding structure and the second electrode assembly having a winding structure according to the exemplary embodiment of the present invention.
FIGS. 8A, 8B, and 8C are perspective views of the lithium secondary battery having a cylindrical shape according to the exemplary embodiment of the present invention.
FIG. 9 is a graph illustrating a concept of self-balancing between the first and second electrode assemblies according to the exemplary embodiment of the present invention.
FIG. 10 is a graph illustrating capacity retention with respect to charging rates in respect to LTO and graphite.
FIG. 11 is a graph illustrating discharging characteristics with respect to temperatures in respect to a secondary battery in the related art and the lithium secondary battery according to the exemplary embodiment of the present invention.
FIG. 12 is a graph illustrating thermal runaway performances in respect to the secondary battery in the related art and the lithium secondary battery according to the exemplary embodiment of the present invention.

### [Best Mode]

In order to sufficiently understand the present invention, advantages in operation of the present invention, and the object to be achieved by carrying out the present invention, reference needs to be made to the accompanying drawings for illustrating an exemplary embodiment of the present invention and contents disclosed in the accompanying drawings.

Hereinafter, an exemplary embodiment of the present invention will be described in detail with reference to the accompanying drawings. However, the present invention may be modified in various different ways, and is not limited to the exemplary embodiment to be described below. Further, a part irrelevant to the description will be omitted to clearly describe the present invention, and the same constituent elements will be designated by the same reference numerals in the drawings.

Throughout the specification, unless explicitly described to the contrary, the word "comprise" and variations such as "comprises" or "comprising", will be understood to imply the inclusion of stated elements but not the exclusion of any other elements.

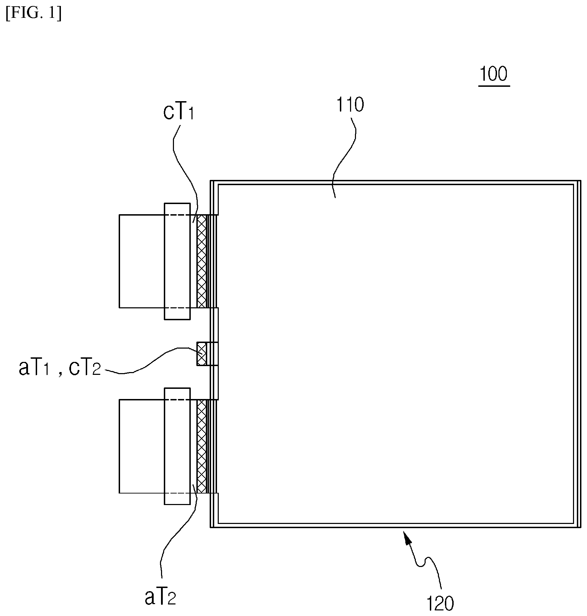

Referring to FIG. 1, a lithium secondary battery 100 according to an exemplary embodiment of the present invention has excellent charging/discharging characteristics and a rated voltage available for a small-sized battery, and may include a first electrode assembly 110 and a second electrode assembly 120.

According to the lithium secondary battery 100 according to the exemplary embodiment of the present invention, each of the first electrode assembly 110 and the second electrode assembly 120 includes an electrode coated with slurry including an LFP positive electrode active material and an electrode coated with slurry including an LTO negative electrode active material, and the first electrode assembly 110 and the second electrode assembly 120 are stacked on each other with a separation membrane interposed therebetween so that the first electrode assembly 110 and the second electrode assembly 120 are insulated from each other. The first electrode assembly 110 and the second electrode assembly 120 are connected to each other by a new type of serial structure through serial connection tabs aT1 and cT2. Therefore, even though the lithium secondary battery uses the LTO negative electrode active material, the lithium secondary battery may have a rated voltage of 3.5 to 3.9 V available for general electronic devices (consumer electronics), and the lithium secondary battery is excellent in low-temperature, charging, and lifespan characteristics. With the stable structure of lithium titanate and the electrochemical characteristics that do not cause lithium plating, it is possible to minimize a risk of explosion that may occur due to thermal and mechanical problems.

The reason why the new type of serial structure is applied to the lithium secondary battery 100 according to the exemplary embodiment of the present invention will be described first, and then a configuration of the lithium secondary battery 100 according to the exemplary embodiment of the present invention will be described in detail.

A structure for making a single cell by connecting two electrode assemblies in parallel has been generally known and used, but a structure for connecting two electrode assemblies in series is not adapted to a lithium ion battery because of the following two serious problems.

First, a carbonate-solvent-based electrolyte (ethylene carbonate, propylene carbonate, dimethyl carbonate, diethyl carbonate, ethyl methyl carbonate, etc.), which is generally and widely used, has the property of being decomposed at a voltage higher than 4.6 V. To solve the problem, a solid electrolyte or a new ionic liquid needs to be used, but the solid electrolyte or the new ionic liquid has low ion conductivity and is environmentally restricted. An electrolyte system, which may be substituted for the carbonate-based solvent, has not yet been found. Even though one electrode assembly (jelly roll), which uses graphite for a negative electrode, is applied to any positive electrode system, the one electrode assembly typically has a voltage of 3.3 V or more. In a case in which the one electrode assembly is connected to another electrode assembly (jelly roll) in series, the electrode assemblies have a voltage of 6.6 V or more, and as a result, the electrode assemblies cannot be used for a general electrolyte system.

Second, there is a problem of imbalance that occurs when two electrode assemblies are connected in series. In a case in which the battery having the serial structure is made by using general LCO/Graphite or NMC/Graphite, there may occur a difference in voltage between the two jelly rolls (electrode assemblies) due to a problem of imbalance between the jelly rolls, and the difference in voltage always overcharges or over discharges one jelly roll, thereby accelerating degradation of the entire end cell.

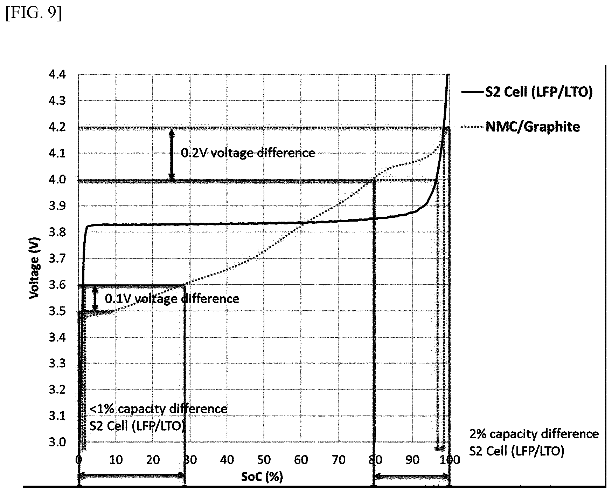

It can be seen from FIG. 9 that in the case of the general NMC/Graphite cell, a difference in charging voltage of 0.2 V causes a difference in charging capacity of 20%. Because the two electrode assemblies are connected in series in the battery, it is difficult for an additional external protective circuit for inhibiting imbalance to be disposed in the battery. It is possible to inhibit the overcharging and over discharging of the electrode assemblies (jelly rolls) by using a chemical method such as a chemical shuttle by means of oxidation and reduction of the chemical shuttle. However, there are problems in that the currently available use range of the chemical shuttle does not exceed 4 V and other performances may deteriorate.

In addition, when the two electrode assemblies (jelly rolls) are connected in parallel, a connection structure becomes simplified, but when the two electrode assemblies (jelly rolls) are connected in series, a connection structure becomes complicated, and as a result, it is difficult to make the serial structure in the form of a general electrode.

The lithium secondary battery 100 according to the exemplary embodiment of the present invention adopts a new type of serial structure in order to solve the aforementioned two problems and eliminate the structural complication caused by the serial connection structure.

That is, according to the lithium secondary battery 100 according to the exemplary embodiment of the present invention, the first electrode assembly 110 and the second electrode assembly 120, each of which has the LTO negative electrode active material and the LFP positive electrode active material, are stacked and connected by the new type of serial structure, such that the lithium secondary battery 100 has a rated voltage equal to or lower than approximately 4.4 V, particularly, a rated voltage of 3.6 to 3.9 V available for a general small-sized battery, and has excellent charging and low-temperature characteristics, a prolonged lifespan, and mechanical and thermal safety in comparison with a secondary battery in the related art. Further, the lithium secondary battery 100 may be used, as an end cell, for general electronic devices (consumer electronics).

In addition, the lithium secondary battery 100 according to the exemplary embodiment of the present invention has the property of autonomously adjusting electric potential by using the nature of LFP and LTO materials that cause a rapid change in electric potential at the end of the charging and discharging, and as a result, the lithium secondary battery 100 may minimize the difference in voltage between the first electrode assembly 110 and the second electrode assembly 120 and continuously maintain balance of electric potential between the two electrode assemblies (jelly rolls). As shown in the graph of FIG. 9, it is possible to minimize a difference in capacity caused by the difference in electric potential between the two electrode assemblies (jelly rolls) during the charging and discharging in comparison with an NMC/Graphite cell.

In addition, in comparison with the case in which the two end cells are simply connected in series, the lithium secondary battery 100 according to the exemplary embodiment of the present invention has a configuration in which sizes of terminal tabs of positive and negative electrodes are reduced, a size of a pouch that constitutes a casing is reduced, or the amount of metal is reduced, and as a result, it is possible to reduce costs and increase energy density by approximately 3 %.

Furthermore, the lithium secondary battery 100 according to the exemplary embodiment of the present invention may be manufactured by a production process in the related art and manufactured in both winding and stacking manners without additional component or instrument.

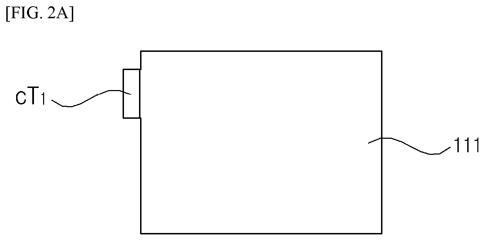

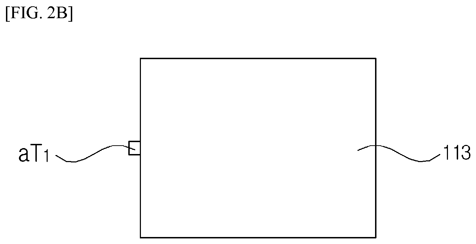

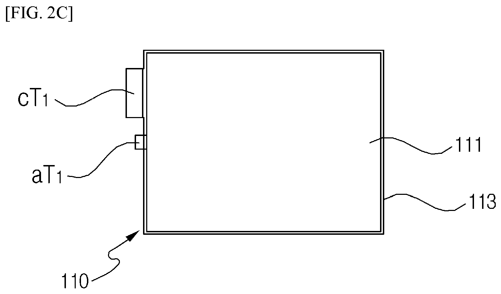

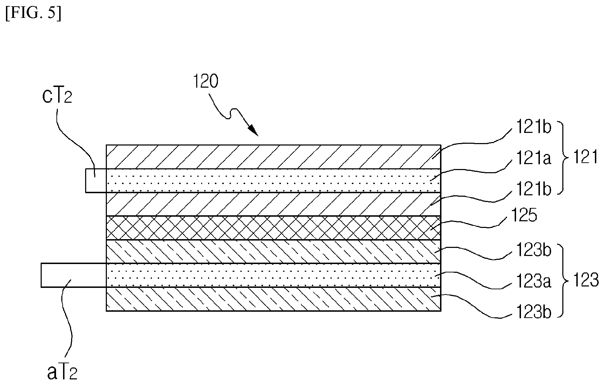

Hereinafter, the configurations of the first electrode assembly 110 and the second electrode assembly 120 will be described in detail with reference to FIGS. 2A, 2B, 2C, and 5.

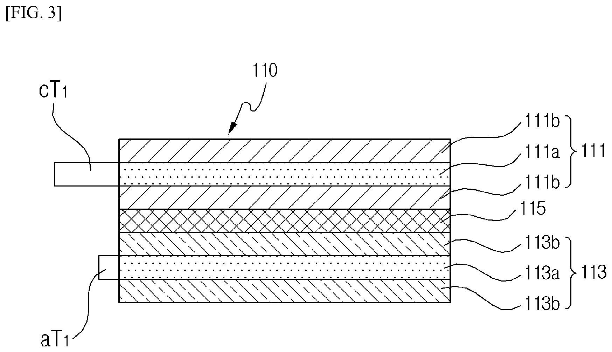

First, the configuration of the first electrode assembly 110 will be described in detail with reference to FIGS. 2A, 2B, 2C, and 3. FIG. 2A is a top plan view of a positive electrode plate (cathode electrode) 111 of the first electrode assembly 110, FIG. 2B is a top plan view of a negative electrode plate (anode electrode) 113 of the first electrode assembly 110, and FIG. 2C is a top plan view illustrating a state in which the positive electrode plate 111 and the negative electrode plate 113 of the first electrode assembly 110 are stacked. FIG. 3 is a cross-sectional view of the first electrode assembly 110.

The first electrode assembly 110 may include the positive electrode plate 111, the negative electrode plate 113, and a separation membrane 115.

In FIG. 2A, a positive electrode tab cT1 may protrude from a left surface of the positive electrode plate 111. Here, the positive electrode tab cT1 may be formed adjacent to an upper side (based on FIG. 3) on the left surface of the positive electrode plate 111.

In FIG. 2B, the serial connection tab aT1 may protrude from a left surface of the negative electrode plate 113. Here, the serial connection tab aT1 may be formed at a central portion of the left surface of the negative electrode plate 113. The serial connection tab aT1 may be smaller in size than the positive electrode tab cT1.

It can be ascertained from FIG. 2C that the positive electrode plate 111 and the negative electrode plate 113 are stacked. Here, the positive electrode tab cT1 and the serial connection tab aT1 do not overlap each other. The separation membrane 115 may be provided between the positive electrode plate 111 and the negative electrode plate 113 and may insulate the positive electrode plate 111 and the negative electrode plate 113. This configuration may be ascertained from FIG. 3.

Referring to FIG. 3, a stacking structure of the first electrode assembly 110 may be ascertained. The positive electrode plate 111 may include a positive electrode current collector 111a and the positive electrode tab cT1. The positive electrode current collector 111a is a part that constitutes a body of the positive electrode plate 111 and may be formed in the form of a quadrangular plate, as illustrated in FIGS. 2A, 2B, and 2C. The positive electrode current collector 111a may be made of a material including aluminum or stainless steel.

Slurry (made by dispersing a positive electrode active material, a binder, and a conductive agent into a solvent) including an LFP positive electrode active material 111b may be applied onto lower and upper surfaces of the positive electrode current collector 111a. Here, the LFP positive electrode active material 111b refers to a lithium iron phosphate (LiFePO₄) active material. The LFP positive electrode active material 111b is a substance that generally forms the positive electrode of the lithium secondary battery, and a detailed description thereof will be omitted. In addition, the LFP positive electrode active material 111b may be substituted with any one of NMC, NCA, LCO, and LMO positive electrode active materials.

The positive electrode tab cT1 may extend from the left surface of the positive electrode current collector 111a (based on FIG. 3). The positive electrode tab cT1 may be made of the same material as the positive electrode current collector 111a. No positive electrode active material is applied onto the positive electrode tab cT1. The positive electrode tab cT1 is connected to a lead tab which is a separate conductive connection component, such that the positive electrode tab cT1 may be utilized as a positive electrode terminal of the lithium secondary battery 100.

The negative electrode plate 113 may include a negative electrode current collector 113a and the serial connection tab aT1. The negative electrode current collector 113a is a part that constitutes a body of the negative electrode plate 113 and may be formed in the form of a quadrangular plate similar to the positive electrode current collector 111a. The negative electrode current collector 113a may be made of a material including aluminum, copper, or stainless steel.

Slurry (made by dispersing a negative electrode active material, a binder, and a conductive agent into a solvent) including an LTO negative electrode active material 113b may be applied onto lower and upper surfaces of the negative electrode current collector 113a.

Here, the LTO negative electrode active material 113b refers to lithium titanium oxide (Li₄Ti₅O₁₂). Since the LTO negative electrode active material 113b has been described above, a detailed description thereof will be omitted.

The serial connection tab aT1 may extend from the left surface of the negative electrode current collector 113a (based on FIG. 3). The serial connection tab aT1 may be made of the same material as the negative electrode current collector 113a. No negative electrode active material is applied onto the serial connection tab aT1. The serial connection tab aT1 may not overlap the positive electrode tab cT1. The serial connection tab aT1 may be smaller in size than the positive electrode tab cT1. The serial connection tab aT1 is connected directly to a serial connection tab aT2 of the second electrode assembly 120 and serves to connect the first electrode assembly 110 and the second electrode assembly 120 by a new type of serial structure.

The separation membrane 115 may be provided between the positive electrode plate 111 and the negative electrode plate 113 and may insulate the positive electrode plate 111 and the negative electrode plate 113. That is, the separation membrane 115 may be provided between the LFP positive electrode active material 111b on the lower surface of the positive electrode current collector 111a and the LTO negative electrode active material 113b on the upper surface of the negative electrode current collector 113a.

The separation membrane 115 electrically separates the positive electrode plate 111 and the negative electrode plate 113 and may allow lithium ions to pass through internal pores of the separation membrane 115. Typically, the separation membrane 115 is manufactured by using a polyolefin-based (polyethylene or polypropylene) material or non-woven fabric and may include any one of polyvinylidene fluoride, polyethylene oxide, polyacrylonitrile, and polyvinylidene fluoride hexafluoropropylene.

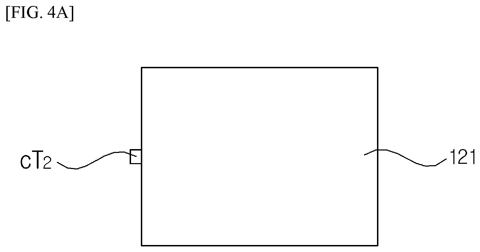

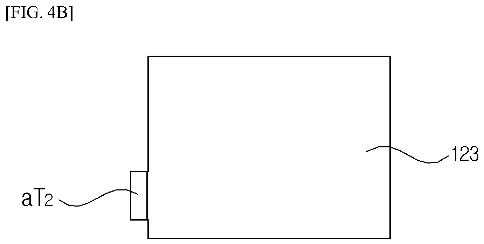

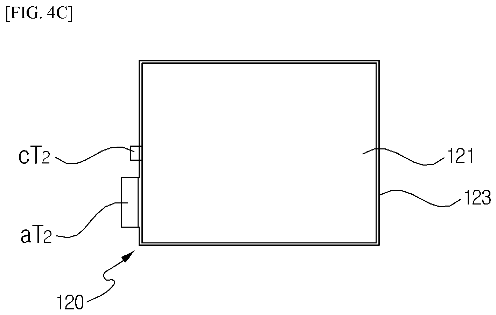

The configuration of the second electrode assembly 120 will be described in detail with reference to FIGS. 4A, 4B, 4C, and 5. FIG. 4A is a top plan view of a positive electrode plate 121 of the second electrode assembly 120, FIG. 4B is a top plan view of a negative electrode plate 123 of the second electrode assembly 120, and FIG. 4C is a top plan view illustrating a state in which the positive electrode plate 121 and the negative electrode plate 123 of the second electrode assembly 120 are stacked. FIG. 5 is a cross-sectional view of the second electrode assembly 120.

The second electrode assembly 120 may include the positive electrode plate 121, the negative electrode plate 123, and a separation membrane 125.

In FIG. 4A, the serial connection tab cT2 may protrude from a left surface of the positive electrode plate 121. Here, the connection tab cT2 may be formed at a central portion of the left surface of the positive electrode plate 121.

In FIG. 4B, the negative electrode tab aT2 may protrude from a left surface of the negative electrode plate 123. Here, the negative electrode tab aT2 may be formed adjacent to a lower side (based on FIGS. 4A, 4B, and 4C) on the left surface of the negative electrode plate 123. The negative electrode tab aT2 may be larger in size than the serial connection tab cT2.

It can be ascertained from FIG. 4C that the positive electrode plate 121 and the negative electrode plate 123 are stacked. Here, the serial connection tab cT2 and the negative electrode tab aT2 do not overlap each other. The separation membrane 125 may be provided between the positive electrode plate 121 and the negative electrode plate 123 and may insulate the positive electrode plate 121 and the negative electrode plate 123. This configuration may be ascertained from FIG. 5.

Referring to FIG. 5, a stacking structure of the second electrode assembly 120 may be ascertained. The positive electrode plate 121 may include a positive electrode current collector 121a and the serial connection tab cT2. The positive electrode current collector 121a is a part that constitutes a body of the positive electrode plate 121 and may be formed in the form of a quadrangular plate, as illustrated in FIGS. 4A, 4B, and 4C. The positive electrode current collector 121a may be made of a material including aluminum or stainless steel.

Slurry (made by dispersing a positive electrode active material, a binder, and a conductive agent into a solvent) including an LFP positive electrode active material 121b may be applied onto lower and upper surfaces of the positive electrode current collector 121a. Here, because the LFP positive electrode active material 121b is identical to the LFP positive electrode active material 111b applied onto the positive electrode current collector 111a of the first electrode assembly 110, a detailed description thereof will be omitted.

The serial connection tab cT2 may extend from the left surface of the positive electrode current collector 121a (based on FIG. 5). The serial connection tab cT2 may be made of the same material as the positive electrode current collector 121a. No positive electrode active material is applied onto the serial connection tab cT2. The serial connection tab cT2 may overlap and be joined to the serial connection tab aT1 of the first electrode assembly 110 and may electrically connect the second electrode assembly 120 and the first electrode assembly 110 in series.

The negative electrode plate 123 may include a negative electrode current collector 123a and the negative electrode tab aT2. The negative electrode current collector 123a is a part that constitutes a body of the negative electrode plate 123 and may be formed in the form of a quadrangular plate similar to the positive electrode plate 121. The negative electrode current collector 123a may be made of a material including aluminum, copper, or stainless steel.

Slurry (made by dispersing a negative electrode active material, a binder, and a conductive agent into a solvent) including an LTO negative electrode active material 123b may be applied onto lower and upper surfaces of the negative electrode current collector 123a. Here, because the LTO negative electrode active material 123b is identical to the LTO negative electrode active material 113b applied onto the negative electrode current collector 113a of the first electrode assembly 110, a detailed description thereof will be omitted.

The negative electrode tab aT2 may extend from the left surface of the negative electrode current collector 123a. The negative electrode tab aT2 may be made of the same material as the negative electrode current collector 123a. No negative electrode active material is applied onto the negative electrode tab aT2. The negative electrode tab aT2 may not overlap the serial connection tab cT2. The negative electrode tab aT2 may be larger in size than the serial connection tab cT2. The negative electrode tab aT2 is connected to a lead tab, which is a separate conductive connection component, such that the negative electrode tab aT2 may be utilized as a negative electrode terminal of the lithium secondary battery 100.

The separation membrane 125 may be provided between the positive electrode plate 121 and the negative electrode plate 123 and may insulate the positive electrode plate 121 and the negative electrode plate 123. That is, the separation membrane 125 may be provided between the LFP positive electrode active material 121b on the lower surface of the positive electrode current collector 121a and the LTO negative electrode active material 123b on the upper surface of the negative electrode current collector 123a. The separation membrane 125 may be made of the same material as the aforementioned separation membrane 115 of the first electrode assembly 110.

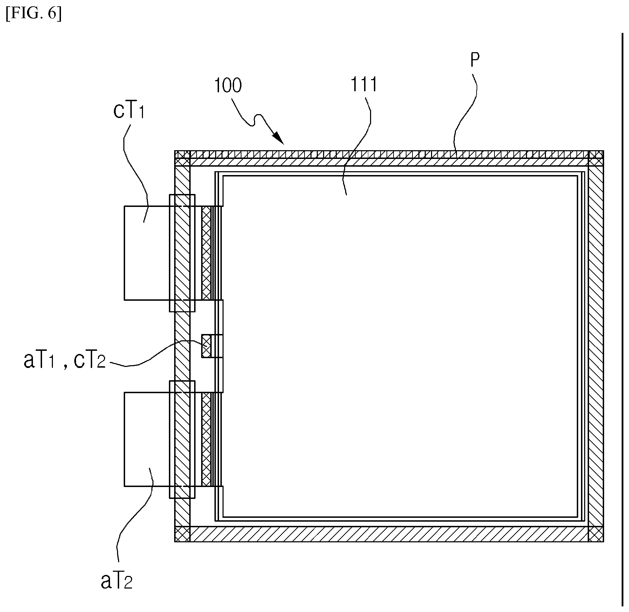

It can be ascertained that FIG. 6 is a top plan view of the lithium secondary battery which has an angular (pouch or metal casing) shape and includes the first electrode assembly having the stacking structure and the second electrode assembly having the stacking structure according to the exemplary embodiment of the present invention.

The first electrode assembly 110 and the second electrode assembly 120 may be stacked with an electrode assembly separation membrane (not illustrated) interposed therebetween. In this case, the positive electrode plate 111 of the first electrode assembly 110 is disposed at an uppermost end.

The positive electrode tab cT1 of the first electrode assembly 110 and the serial connection tab cT2 of the second electrode assembly 120 may overlap and be joined to each other, such that the first electrode assembly 110 and the second electrode assembly 120 are connected by a new type of serial structure.

A quadrangular casing P may accommodate the first electrode assembly 110, the second electrode assembly 120, and the electrode assembly separation membrane. Here, examples of the quadrangular casing P may include a pouch, a metal can, and the like.

The positive electrode tab cT1 is connected to the lead tab which is a separate conductive connection component, such that the positive electrode tab cT1 may protrude to the outside of the quadrangular casing P and may be used as a positive electrode terminal of the lithium secondary battery 100. In addition, the negative electrode tab aT2 is connected to the lead tab which is a separate conductive connection component, such that the negative electrode tab aT2 may protrude to the outside of the quadrangular casing P and may be used as a negative electrode terminal of the lithium secondary battery 100. A liquid electrolyte, a gel type electrolyte such as polymer, or a solid electrolyte may be provided in the quadrangular casing P in order to allow the lithium ions to smoothly move.

Meanwhile, each of the first electrode assembly 110 and the second electrode assembly 120 may be formed to have a jelly roll structure in order to increase a battery capacity. Here, the jelly roll structure may be formed by two types of methods.

In the case of a first jelly roll structure, the multiple first electrode assemblies 110 and the multiple second electrode assemblies 120 are provided, the multiple first electrode assemblies 110 are stacked on one another with separation membranes interposed therebetween so as to form a jelly roll structure, and the multiple second electrode assemblies 120 are stacked on one another with separation membranes interposed therebetween so as to form a jelly roll structure. Thereafter, the first electrode assembly 110 having the jelly roll structure is stacked on the second electrode assembly 120 having the jelly roll structure with the electrode assembly separation membrane interposed therebetween, and as a result, the lithium secondary battery 110 having an angular (pouch or a metal casing) shape is completely made.

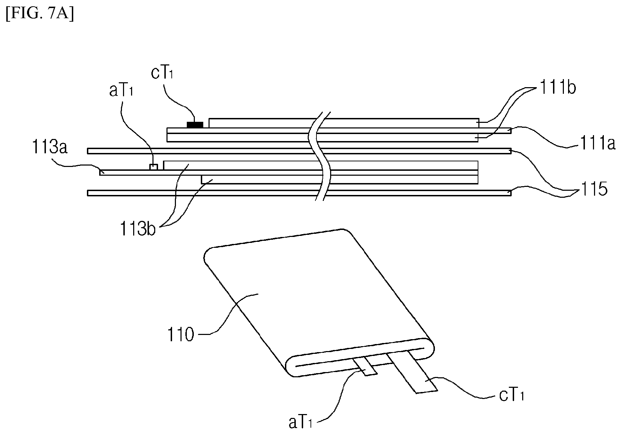

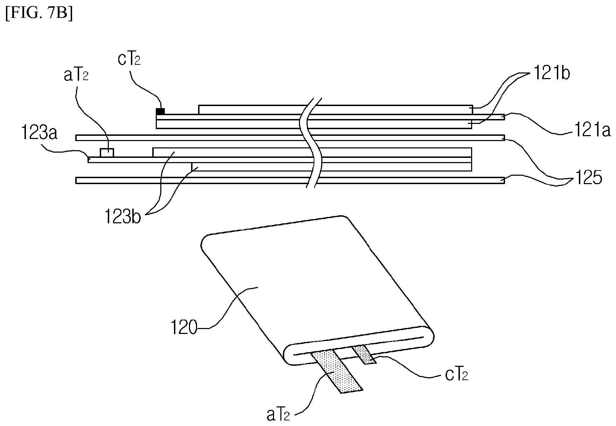

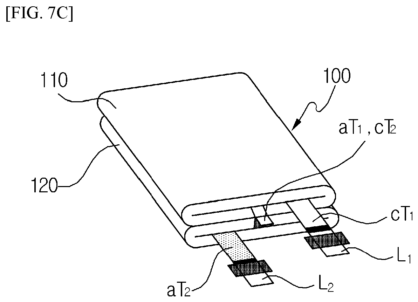

The second jelly roll structure may be ascertained from the following FIGS. 7A, 7B, and 7C.

It can be ascertained that FIGS. 7A, 7B, and 7C are cross-sectional views and perspective views of the lithium secondary battery which has an angular (pouch or metal casing) shape and includes the first electrode assembly having a winding structure and the second electrode assembly having a winding structure according to the exemplary embodiment of the present invention.

FIG. 7A is a cross-sectional view and a perspective view of the first electrode assembly having the winding structure, FIG. 7B is a cross-sectional view and a perspective view of the second electrode assembly having the winding structure, and FIG. 7C is a perspective view of the angular lithium secondary battery having the first electrode assembly stacked on the second electrode assembly.

The first electrode assembly 110 is wound to form the jelly roll structure, as illustrated in FIG. 7A, and the second electrode assembly 120 is wound to form the jelly roll structure, as illustrated in FIG. 7B.

As illustrated in FIG. 7C, the first electrode assembly 110 is stacked on the second electrode assembly 120, the serial connection tabs aT1 and cT2 are coupled to each other, and the first electrode assembly 110 and the second electrode assembly 120 are connected in series, such that the lithium secondary battery 100 may be finally and completely made. In this case, the positive electrode tab cT1 of the first electrode assembly 110 is connected to a lead tab L1 and used as a positive electrode terminal, and the negative electrode tab aT2 of the second electrode assembly 120 is connected to a lead tab L2 and used as a negative electrode terminal.

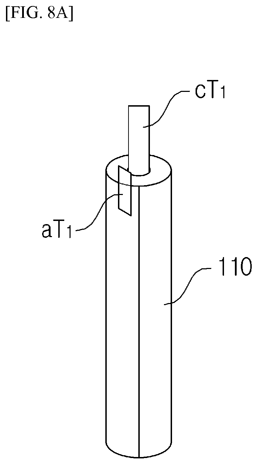

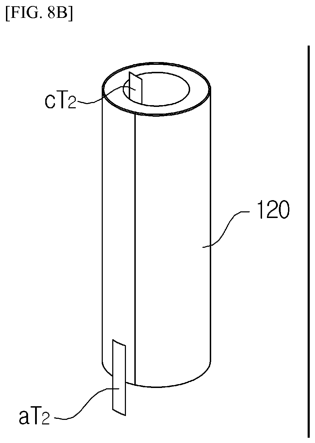

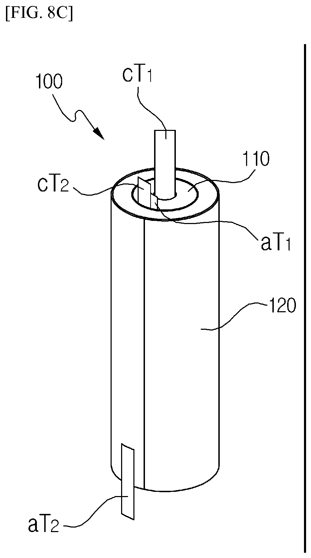

Referring to FIGS. 8A, 8B, and 8C, the cylindrical lithium secondary battery 100 may be ascertained. FIG. 8A is a perspective view of the first electrode assembly 110 that constitutes an inner cylindrical shape of the cylindrical lithium secondary battery 100, FIG. 8B is a perspective view of the second electrode assembly 120 that constitutes an outer cylindrical shape of the cylindrical lithium secondary battery 100, and FIG. 8C is a perspective view of the cylindrical lithium secondary battery 100.

As illustrated in FIG. 8A, the first electrode assembly 110 may constitute the inner cylindrical shape by holding and winding the positive electrode plate, the negative electrode plate, and the separation membrane by using a mandrel.

As illustrated in FIG. 8B, the second electrode assembly 120 may constitute the outer cylindrical shape by winding the positive electrode plate, the negative electrode plate, and the separation membrane so that the positive electrode plate, the negative electrode plate, and the separation membrane surround an outer circumference of the first electrode assembly 120.

As illustrated in FIG. 8C, the second electrode assembly 120, which constitutes the outer cylindrical shape, surrounds and is coupled to the first electrode assembly 110 which constitutes the inner cylindrical shape, the serial connection tabs aT1 and cT2 are coupled to each other, and the first electrode assembly 110 and the second electrode assembly 120 are connected in series, such that the cylindrical lithium secondary battery 100 may be finally and completely made.

Here, the negative electrode tab aT2 of the second electrode assembly 120 may be formed in a direction opposite to a direction in which the positive electrode tab cT1 of the first electrode assembly 110, the serial connection tab aT1 of the first electrode assembly, and the serial connection tab cT2 of the second electrode assembly 120 are formed.

That is, the positive electrode tab cT1 of the first electrode assembly 110, the serial connection tab aT1 of the first electrode assembly 110, and the serial connection tab cT2 of the second electrode assembly 120 may be disposed to protrude from an upper end portion of the cylindrical lithium secondary battery 100, and the positive electrode tab cT1 of the first electrode assembly 110 is connected to an upper cap assembly and forms a positive electrode terminal of the battery. The negative electrode tab aT2 of the second electrode assembly 120 is disposed to protrude from a lower end portion of the cylindrical lithium secondary battery 100 and connected to a lower portion of a cylindrical metal can so that the metal can itself forms negative electrode electric potential. The cap at the upper side and the metal can at the lower side are insulated by insulating plastic, such that the positive electrode terminal and the negative electrode terminal may be electrically insulated.

Meanwhile, circular protective caps (not illustrated) may be coupled to upper and lower ends of the cylindrical lithium secondary battery 100 in order to protect the positive electrode tab cT1 of the first electrode assembly 110, the serial connection tab aT1 of the first electrode assembly 110, the serial connection tab cT2 of the second electrode assembly 120, and the negative electrode tab aT2 of the second electrode assembly 120.

FIG. 9 is a graph illustrating a concept of self-balancing between the first and second electrode assemblies according to the exemplary embodiment of the present invention.

FIG. 9 illustrates that the lithium secondary battery (S2 Cell LFP/LTO) 100 according to the exemplary embodiment of the present invention has a concept of self-balancing that inhibits imbalance between the first and second electrode assemblies 110 and 120.

Hereinafter, self-balancing characteristics of the lithium secondary battery 100 according to the exemplary embodiment of the present invention will be described while being compared with an NMC/Graphite secondary battery in the related art.

First, in the case of the NMC/Graphite secondary battery in the related art, a difference in voltage of 0.2 V causes a difference in charging capacity of 20%. In contrast, in the case of the lithium secondary battery 100 according to the exemplary embodiment of the present invention, a difference in voltage of 0.2 V causes a difference in charging capacity of 2%. This situation shows that the self-balancing occurs to maximally inhibit a difference in charging amount caused by a rapid change in electric potential at the end of the charging.

In addition, in the case of the NMC/Graphite secondary battery in the related art, a difference in voltage of 0.1 V causes a difference in discharging capacity of 27%. In contrast, in the case of the lithium secondary battery 100 according to the exemplary embodiment of the present invention, a difference in voltage of 0.1 V causes a difference in discharging capacity of less than 1%. This situation shows that the self-balancing occurs at the end of the discharging.

As described above, in the case of the lithium secondary battery 100 according to the exemplary embodiment of the present invention, the self-balancing occurs at the end of the charging and discharging, thereby minimizing a difference in capacity caused by a difference in voltage between the two electrode assemblies (jelly rolls) in comparison with the NMC/Graphite secondary battery in the related art.

Hereinafter, detailed specifications of the lithium secondary battery 100 according to the exemplary embodiment of the present invention will be described with reference to Table 1.

**[Table 1]**

| Battery Type | Current Technology | | | | Lithium Secondary Battery According to Exemplary Embodiment of Present Invention |
|---|---|---|---|---|---|
| | Lithium Cobalt Oxide | Lithium Nickel Manganese Cobalt Oxide | Lithium Iron Phosphate | Lithium Titanate | |
| Rated Voltage (Nominal Voltage) | 3.8 V | 3.7 V | 3.3 V | 1.9 V | 3.8 V |
| Charging Rate | 0.7 C | 0.7 C | 1 C | 5 C | 5 C |
| Charging/Discharging Lifespan (Cycle Life) | 500 to 1,000 times | 1,000 to 2,000 times | 1,000 to 2,000 times | 3,000 to 7,000 times | 3,000 to 7,000 times |
| Thermal Runaway | 150°C | 190°C | 230°C | > 300°C | > 300°C |
| Application | Mobile Computer, Tablet Computer, Laptop Computer, Camera | Mobile Device, Electric Vehicle, Industrial Battery | Electric Vehicle, Electric Bike, Industrial Battery | Electricity Storage System (ESS), Electric Vehicle, Solar Cell | Electricity Storage System (ESS), Solar Cell, Electric Vehicle, Electric Bike, Industrial Battery |

As shown in Table 1, the lithium secondary battery 100 according to the exemplary embodiment of the present invention has the new type of serial structure in which the serial connection tab aT1 of the first electrode assembly 110 and the serial connection tab cT2 of the second electrode assembly 120 are directly connected, and as a result, it is possible to solve various types of problems that occur when the LTO and the LFP are used as the negative electrode active material and the positive electrode active material, respectively. Therefore, the lithium secondary battery 100 may have a high rated voltage (3.8 V) that may solve the problem caused by a low rated voltage (1.9 to 2.4 V) of the lithium secondary battery that uses the LTO negative electrode active material in the related art.

In addition, the lithium secondary battery 100 according to the exemplary embodiment of the present invention may have a higher charging rate (e.g., 5 C) than any type of secondary battery in the related art, have a superior charging performance even at a low temperature, have lifespan characteristics at least three or more times better than a secondary battery in the related art, and exhibit safety without causing thermal runaway even at a high temperature of 300 degrees or more.

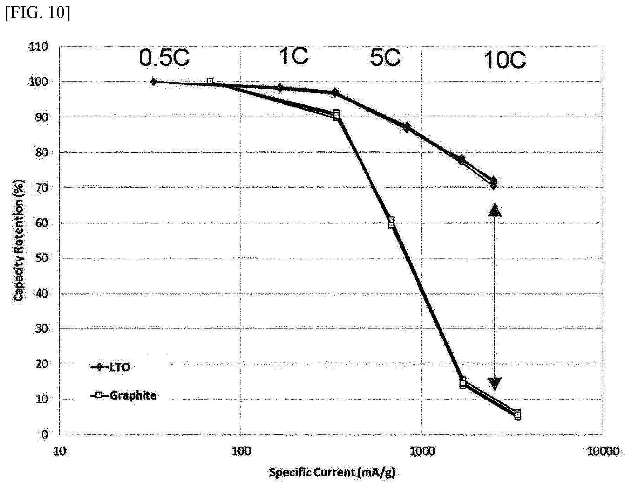

A comparison between a performance of the lithium secondary battery 100 according to the exemplary embodiment of the present invention and a performance of a secondary battery in the related art will be described below with reference to FIGS. 10 to 12.

FIG. 10 is a graph illustrating capacity retention with respect to charging rates in respect to LTO and graphite utilized as the negative electrode active material of the secondary battery.

In the graph in FIG. 10, the LTO and the graphite have similar capacity retention in a case in which a specific current of 100 mA/g or less flows when the charging is performed at a low rate (0.5 C or less), but there is a rapid difference in capacity retention when the charging is performed at a high rate (2 C or more), and there is a difference in capacity retention by seven or more times in a case in which a specific current of 1,000 mA/g or more flows. The improvement is possible as the battery according to the present invention is used as a secondary battery for solving the aforementioned problem with the rapid charging.

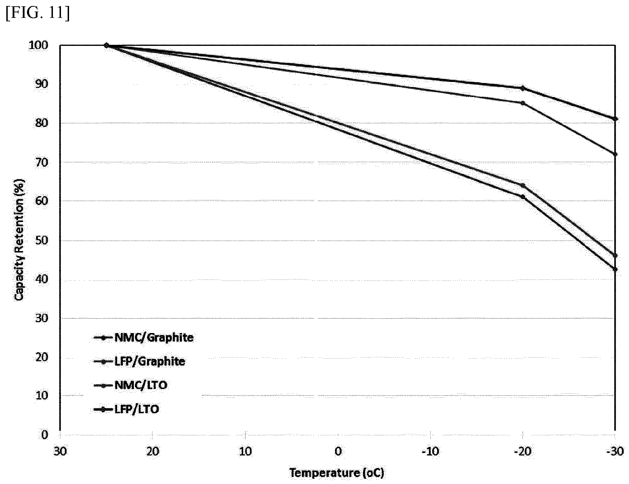

FIG. 11 is a graph illustrating discharging characteristics with respect to temperatures in respect to a secondary battery in the related art and the lithium secondary battery according to the exemplary embodiment of the present invention. Here, an NMC/Graphite secondary battery, an LFP/Graphite secondary battery, and an NMC/LTO secondary battery will be described as an example of the secondary battery in the related art.

In the graph in FIG. 11, the NMC/Graphite secondary battery, the LFP/Graphite secondary battery, the NMC/LTO secondary battery, and the lithium secondary battery (LFP/LTO) according to the exemplary embodiment of the present invention have discharging rate proximate to 100% at about room temperature, and the discharging performances thereof are decreased as the temperature is decreased. In this case, the lithium secondary battery (LFP/LTO) according to the exemplary embodiment of the present invention has a discharging rate of approximately 80% at -30°C, such that the lithium secondary battery (LFP/LTO) has better characteristics at a low temperature than the secondary battery in the related art.

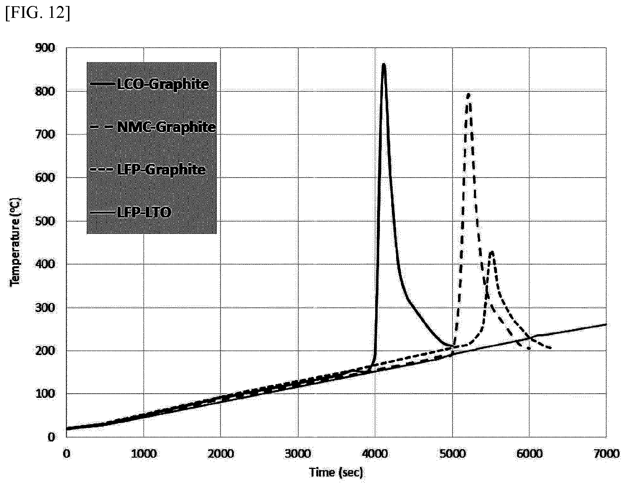

FIG. 12 is a graph illustrating thermal runaway performances in respect to the secondary battery in the related art and the lithium secondary battery according to the exemplary embodiment of the present invention. Here, an LCO/Graphite secondary battery, an NMC/Graphite secondary battery, and an LFP/Graphite secondary battery will be described as an example of the secondary battery in the related art.

In the graph FIG. 12, when analyzing the thermal runaway of the LCO/Graphite secondary battery by increasing a temperature from the room temperature at a rate of 5°C/min, the thermal runaway occurs when the temperature reaches approximately 150°C.

In the case of the NMC/Graphite secondary battery, the thermal runaway occurs when the temperature reaches approximately 190°C.

In the case of the LFP/Graphite secondary battery, the thermal runaway occurs when the temperature reaches approximately 230°C.

In contrast, in the case of the lithium secondary battery (LFP/LTO) according to the exemplary embodiment of the present invention, the thermal runaway does not occur until the charging temperature reaches 250°C.

As described above, the lithium secondary battery according to the exemplary embodiment of the present invention may be more quickly charged than the secondary battery in the related art, may have better charging and discharging characteristics at a low temperature than the secondary battery in the related art, and may be stronger against heat than the secondary battery in the related art.

Therefore, the lithium secondary battery 100 according to the exemplary embodiment of the present invention may have excellent temperature and charging/discharging characteristics of the LTO negative electrode active material, may have a rated voltage available for general electronic devices (consumer electronics), and may have structural stability of the LTO negative electrode active material and the electrochemical property of preventing lithium plating, thereby reducing a risk of explosion caused by an increase in temperature. Accordingly, the lithium secondary battery 100 may be applied to various fields including an electricity storage system (ESS), a solar cell, an electric vehicle, an electric bike, and an industrial battery.

## Claims

1. A lithium secondary battery (100) comprising:
a first electrode assembly (110) which includes a positive electrode plate (111) having a positive electrode tab (cT1) that is used as a positive electrode terminal, a negative electrode plate (113) having a serial connection tab (aT1), and a separation membrane (115) provided between the positive electrode plate (111) and the negative electrode plate (113);
a second electrode assembly (120) which includes a positive electrode plate (121) having a serial connection tab (cT2), a negative electrode plate (123) having a negative electrode tab (aT2) that is used as a negative electrode terminal, and a separation membrane (125) provided between the positive electrode plate (121) and the negative electrode plate (123), and which is stacked with an electrode assembly separation membrane so as to be insulated from the first electrode assembly (110); and
a casing (P) accommodating the stacked first electrode assembly (110), second electrode assembly (120), and electrode assembly separation membrane interposed therebetween,
wherein the serial connection tab (aT1) of the first electrode assembly (110) is connected to the serial connection tab (cT2) of the second electrode assembly (120), and the first electrode assembly (110) and the second electrode assembly (120) are connected in series by the serial connection tabs (aT1, cT2),
wherein
each of the positive electrode plates (111; 121) of the first electrode assembly (110) and the second electrode assembly (120) has a positive electrode current collector (111a; 121a) onto which an LFP positive electrode active materials (111b) or NMC positive electrode active materials are applied,
each of the negative electrode plates (113; 123) of the first electrode assembly (110) and the second electrode assembly (120) has a negative electrode current collector (113a; 123a) onto which an LTO negative electrode active material (113b; 123b) is applied,
an electrolyte is provided inside the casing (P),
the first electrode assembly (110) and the second electrode assembly (120) are configured to be self-balanced by using an positive electrode active material and an negative electrode active material, and
each of the first electrode assembly (110) and the second electrode assembly (120) is wound to form a jelly roll structure,
wherein the serial connection tab (aT1) and the positive electrode tab (cT1) extend on a same first side of the first electrode assembly (110).

2. The lithium secondary battery (100) of claim 1, wherein multiple first electrode assemblies (110) and multiple second electrode assemblies (120) are provided so as to increase a battery capacity, wherein the multiple first electrode assemblies (110) are stacked with the separation membranes (115; 125) interposed therebetween so as to form a jelly roll structure, and wherein the multiple second electrode assemblies (120) are stacked with the separation membranes (115; 125) interposed therebetween so as to form a jelly roll structure.

3. The lithium secondary battery (100) of claim 1 or 2, wherein the first electrode assembly (110) is deformed in a cylindrical shape so as to constitute an inner cylindrical shape, the second electrode assembly (120) surrounds an outer circumference of the first electrode assembly (110) so as to constitute an outer cylindrical shape.

4. The lithium secondary battery (100) of claim 1 or 2, wherein no positive electrode active material is applied onto the positive electrode tab (cT1) of the first electrode assembly (110), and the positive electrode tab (cT1) of the first electrode assembly (110) extends from one side of the positive electrode current collector (111a) of the first electrode assembly (110), is connected to a positive electrode lead tab (L1), and is used as the positive electrode terminal.

5. The lithium secondary battery (100) of claim 4, wherein no negative electrode active material is applied onto the serial connection tab (aT1) of the first electrode assembly (110), and the serial connection tab (aT1) of the first electrode assembly (110) extends from one side of the negative electrode current collector (113a) of the first electrode assembly (110).

6. The lithium secondary battery (100) of claim 5, wherein the serial connection tab (aT1) of the first electrode assembly (110) and the positive electrode tab (cT1) of the first electrode assembly (110) are configured so as not to overlap each other.

7. The lithium secondary battery (100) of claim 6, wherein no positive electrode active material is applied onto the serial connection tab (cT2) of the second electrode assembly (120), and the serial connection tab (cT2) of the second electrode assembly (120) extends from one side of the positive electrode current collector (121a) of the second electrode assembly (120).

8. The lithium secondary battery (100) of claim 7, wherein the serial connection tab (aT1) of the first electrode assembly (110) and the serial connection tab (cT2) of the second electrode assembly (120) overlap each other so as to electrically connect the first electrode assembly (110) and the second electrode assembly (120).

9. The lithium secondary battery (100) of claim 8, wherein no LTO negative electrode active material is applied onto the negative electrode tab (aT2) of the second electrode assembly (120), and the negative electrode tab (aT2) of the second electrode assembly (120) extends from one side of the negative electrode current collector (123a) of the second electrode assembly (120), is connected to a negative electrode lead tab (L2), and is used as the negative electrode terminal.

10. The lithium secondary battery (100) of claim 9, wherein the positive electrode tab (cT1) of the first electrode assembly (110) and the negative electrode tab (aT2) of the second electrode assembly (120) are configured so as not to overlap each other.

11. The lithium secondary battery (100) of claim 1, wherein each of the negative electrode plate (113) of the first electrode assembly (110), the positive electrode plate (111) of the first electrode assembly (110), the negative electrode plate (123) of the second electrode assembly (120), and the negative electrode plate (123) of the second electrode assembly (120) includes aluminum, stainless steel, or copper.

## Patentansprüche

1. Lithium-Sekundärbatterie (100) aufweisend:
eine erste Elektrodenanordnung (110), die eine Positivelektrodenplatte (111) mit einer als Positivelektrodenanschluss verwendete Positivelektrodenlasche (cT1), eine Negativelektrodenplatte (113) mit einer Reihenschaltungslasche (aT1) und eine zwischen der Positivelektrodenplatte (111) und der Negativelektrodenplatte (113) vorgesehene Trennmembran (115) umfasst;
eine zweite Elektrodenanordnung (120), die eine Positivelektrodenplatte (121) mit einer Reihenschaltungslasche (cT2), eine Negativelektrodenplatte (123) mit einer als Negativelektrodenanschluss verwendete Negativelektrodenlasche (aT2), und eine zwischen der Positivelektrodenplatte (121) und der Negativelektrodenplatte (123) vorgesehene Trennmembran (125) umfasst, und die mit einer Elektrodenanordnung-Trennmembran so gestapelt ist, dass sie von der ersten Elektrodenanordnung (110) isoliert ist; und
ein Gehäuse (P), das die gestapelte erste Elektrodenanordnung (110), die zweite Elektrodenanordnung (120) und die dazwischen angeordnete Elektrodenanordnung-Trennmembran aufnimmt,
wobei die Reihenschaltungslasche (aT1) der ersten Elektrodenanordnung (110) mit der Reihenschaltungslasche (cT2) der zweiten Elektrodenanordnung (120) verbunden ist und die erste Elektrodenanordnung (110) und die zweite Elektrodenanordnung (120) durch die Reihenschaltungslaschen (aT1, cT2) in Reihe geschaltet sind,
wobei
jede der Positivelektrodenplatten (111; 121) der ersten Elektrodenanordnung (110) und der zweiten Elektrodenanordnung (120) einen Positivelektrodenstromkollektor (111a; 121a) aufweist, auf den ein LFP-Positivelektroden-Aktivmaterial (111b) oder ein NMC-PositivelektrodenAktivmaterial aufgebracht ist,
jede der Negativelektrodenplatten (113; 123) der ersten Elektrodenanordnung (110) und der zweiten Elektrodenanordnung (120) einen Negativelektrodenstromkollektor (113a; 123a) aufweist, auf den ein LTO-negatives Elektrodenaktivmaterial (113b; 123b) aufgebracht ist,
ein Elektrolyt innerhalb des Gehäuses (P) vorgesehen ist,
die erste Elektrodenanordnung (110) und die zweite Elektrodenanordnung (120) so gestaltet sind, dass sie durch Verwendung eines Positivelektrodenaktivmaterials und eines Negativelektrodenaktivmaterials selbstausgleichend sind, und
die erste Elektrodenanordnung (110) und die zweite Elektrodenanordnung (120) jeweils zu einer Jelly-Roll-Struktur gewickelt sind,
wobei sich die Reihenschaltungslasche (aT1) und die Positivelektrodenlasche (cT1) auf derselben ersten Seite der ersten Elektrodenanordnung (110) erstrecken.

2. Lithium-Sekundärbatterie (100) nach Anspruch 1, wobei mehrere erste Elektrodenanordnungen (110) und mehrere zweite Elektrodenanordnungen (120) vorgesehen sind, um die Batteriekapazität zu erhöhen, wobei die mehreren ersten Elektrodenanordnungen (110) mit den dazwischen angeordneten Trennmembranen (115; 125) gestapelt sind, um eine Jelly-Roll-Struktur zu bilden, und wobei die mehreren zweiten Elektrodenanordnungen (120) mit den Trennmembranen (115; 125) dazwischen gestapelt sind, um eine Jelly-Roll-Struktur zu bilden.

3. Lithium-Sekundärbatterie (100) nach Anspruch 1 oder 2, wobei die erste Elektrodenanordnung (110) in eine zylindrische Form verformt ist, um eine innere zylindrische Form zu bilden, und die zweite Elektrodenanordnung (120) einen Außenumfang der ersten Elektrodenanordnung (110) umgibt, um eine äußere zylindrische Form auszubilden.

4. Lithium-Sekundärbatterie (100) nach Anspruch 1 oder 2, wobei kein Positivelektrodenaktivmaterial auf die Positivelektrodenlasche (cT1) der ersten Elektrodenanordnung (110) aufgebracht ist und sich die Positivelektrodenlasche (cT1) der ersten Elektrodenanordnung (110) von einer Seite des Positivelektrodenstromkollektors (111a) der ersten Elektrodenanordnung (110) erstreckt, mit einer Positivelektrodenanschlusslasche (L1) verbunden ist und als der Positivelektrodenanschluss verwendet wird.

5. Lithium-Sekundärbatterie (100) nach Anspruch 4, wobei kein Negativelektrodenaktivmaterial auf die Reihenschaltungslasche (aT1) der ersten Elektrodenanordnung (110) aufgebracht ist und sich die Reihenschaltungslasche (aT1) der ersten Elektrodenanordnung (110) von einer Seite des Negativelektrodenstromkollektors (113a) der ersten Elektrodenanordnung (110) erstreckt.

6. Lithium-Sekundärbatterie (100) nach Anspruch 5, wobei die Reihenschaltungslasche (aT1) der ersten Elektrodenanordnung (110) und die Positivelektrodenlasche (cT1) der ersten Elektrodenanordnung (110) so konfiguriert sind, dass sie sich nicht überlappen.

7. Lithium-Sekundärbatterie (100) nach Anspruch 6, wobei kein Positivelektrodenaktivmaterial auf die Reihenschaltungslasche (cT2) der zweiten Elektrodenanordnung (120) aufgebracht ist und sich die Reihenschaltungslasche (cT2) der zweiten Elektrodenanordnung (120) von einer Seite des Positivelektrodenstromkollektors (121a) der zweiten Elektrodenanordnung (120) erstreckt.

8. Lithium-Sekundärbatterie (100) nach Anspruch 7, wobei sich die Reihenschaltungslasche (aT1) der ersten Elektrodenanordnung (110) und die Reihenschaltungslasche (cT2) der zweiten Elektrodenanordnung (120) überlappen, um die erste Elektrodenanordnung (110) und die zweite Elektrodenanordnung (120) elektrisch zu verbinden.

9. Lithium-Sekundärbatterie (100) nach Anspruch 8, wobei kein LTO-Negativelektroden-Aktivmaterial auf die Negativelektrodenlasche (aT2) der zweiten Elektrodenanordnung (120) aufgebracht ist und sich die Negativelektrodenlasche (aT2) der zweiten Elektrodenanordnung (120) von einer Seite des Negativelektrodenstromkollektors (123a) der zweiten Elektrodenanordnung (120) erstreckt, mit einer Negativelektrodenanschlusslasche (L2) verbunden ist und als Negativelektrodenanschluss verwendet wird.

10. Lithium-Sekundärbatterie (100) nach Anspruch 9, wobei die Positivelektrodenlasche (cT1) der ersten Elektrodenanordnung (110) und die Negativelektrodenlasche (aT2) der zweiten Elektrodenanordnung (120) so gestaltet sind, dass sie sich nicht überlappen.

11. Lithium-Sekundärbatterie (100) nach Anspruch 1, wobei jede der Negativelektrodenplatten (113) der ersten Elektrodenanordnung (110), die Positivelektrodenplatte (111) der ersten Elektrodenanordnung (110) die Negativelektrodenplatte (123) der zweiten Elektrodenanordnung (120) und die Negativelektrodenplatte (123) der zweiten Elektrodenanordnung (120) Aluminium, Edelstahl oder Kupfer umfassen.

## Revendications

1. Une batterie secondaire au lithium (100) comprenant :
un premier ensemble d'électrodes (110) qui comprend une plaque d'électrode positive (111) ayant une languette d'électrode positive (cT1) qui est utilisée comme borne d'électrode positive, une plaque d'électrode négative (113) ayant une languette de connexion en série (aT1), et une membrane de séparation (115) prévue entre la plaque d'électrode positive (111) et la plaque d'électrode négative (113) ;
un deuxième ensemble d'électrodes (120) qui comprend une plaque d'électrode positive (121) ayant une languette de connexion en série (cT2), une plaque d'électrode négative (123) ayant une languette d'électrode négative (aT2) qui est utilisée comme borne d'électrode négative, et une membrane de séparation (125) prévue entre la plaque d'électrode positive (121) et la plaque d'électrode négative (123), et qui est empilé avec une membrane de séparation d'ensemble d'électrodes de manière à être isolé du premier ensemble d'électrodes (110) ; et
un boîtier (P) logeant le premier ensemble d'électrodes empilé (110), le deuxième ensemble d'électrodes (120) et la membrane de séparation d'ensembles d'électrodes interposée entre eux,
dans lequel la languette de connexion en série (aT1) du premier ensemble d'électrodes (110) est connectée à la languette de connexion en série (cT2) du deuxième ensemble d'électrodes (120), et le premier ensemble d'électrodes (110) et le deuxième ensemble d'électrodes (120) sont connectés en série par les languettes de connexion en série (aT1, cT2),
dans lequel
chacune des plaques d'électrode positive (111 ; 121) du premier ensemble d'électrodes (110) et du deuxième ensemble d'électrodes (120) comporte un collecteur de courant d'électrode positive (111a ; 121a) sur lequel sont appliqués des matériaux actifs d'électrode positive LFP (111b) ou des matériaux actifs d'électrode positive NMC, chacune des plaques d'électrode négative (113 ; 123) du premier ensemble d'électrodes (110) et du deuxième ensemble d'électrodes (120) comporte un collecteur de courant d'électrode négative (113a ; 123a) sur lequel est appliqué un matériau actif d'électrode négative LTO (113b ; 123b),
un électrolyte est prévu à l'intérieur du boîtier (P),
le premier ensemble d'électrodes (110) et le deuxième ensemble d'électrodes (120) sont configurés pour être auto-équilibrés en utilisant un matériau actif d'électrode positive et un matériau actif d'électrode négative, et
chacun des premier (110) et deuxième (120) ensembles d'électrodes est enroulé pour former une structure en rouleau,
dans lequel la languette de connexion en série (aT1) et la languette d'électrode positive (cT1) s'étendent sur un même premier côté du premier ensemble d'électrodes (110).

2. La batterie secondaire au lithium (100) selon la revendication 1, dans laquelle plusieurs premiers assemblages d'électrodes (110) et plusieurs seconds assemblages d'électrodes (120) sont prévus de manière à augmenter la capacité de la batterie, dans laquelle les multiples premiers assemblages d'électrodes (110) (110) sont empilés avec les membranes de séparation (115 ; 125) intercalées entre eux de manière à former une structure « jelly roll », et dans laquelle les multiples seconds ensembles d'électrodes (120) sont empilés avec les membranes de séparation (115 ; 125) intercalées entre eux de manière à former une structure en rouleau de gelée.

3. La batterie secondaire au lithium (100) selon la revendication 1 ou 2, dans laquelle le premier ensemble d'électrodes (110) est déformé en une forme cylindrique de manière à constituer une forme cylindrique interne, le deuxième ensemble d' es d'électrodes (120) entoure une circonférence externe du premier ensemble d'électrodes (110) de manière à constituer une forme cylindrique externe.

4. La batterie secondaire au lithium (100) selon la revendication 1 ou 2, dans laquelle aucun matériau actif d'électrode positive n'est appliqué sur la languette d'électrode positive (cT1) du premier ensemble d'électrodes (110), et la languette d'électrode positive (cT1) du premier ensemble d'électrodes (110) s'étend depuis un côté du collecteur de courant d'électrode positive (111a) du premier ensemble d'électrodes (110), est connectée à une languette de connexion d'électrode positive (L1) et est utilisée comme borne d'électrode positive.

5. La batterie secondaire au lithium (100) selon la revendication 4, dans laquelle aucun matériau actif d'électrode négative n'est appliqué sur la languette de connexion en série (aT1) du premier ensemble d'électrodes (110), et la languette de connexion en série (aT1) du premier ensemble d'électrodes (110) s'étend à partir d'un côté du collecteur de courant d'électrode négative (113a) du premier ensemble d'électrodes (110).

6. La batterie secondaire au lithium (100) selon la revendication 5, dans laquelle la languette de connexion en série (aT1) du premier ensemble d'électrodes (110) et la languette d'électrode positive (cT1) du premier ensemble d'électrodes (110) sont configurées de manière à ne pas se chevaucher.

7. La batterie secondaire au lithium (100) selon la revendication 6, dans laquelle aucun matériau actif d'électrode positive n'est appliqué sur la languette de connexion en série (cT2) du deuxième ensemble d'électrodes (120), et la languette de connexion en série (cT2) du deuxième ensemble d'électrodes (120) s'étend à partir d'un côté du collecteur de courant d'électrode positive (121a) du deuxième ensemble d'électrodes (120).

8. La batterie secondaire au lithium (100) selon la revendication 7, dans laquelle la languette de connexion en série (aT1) du premier ensemble d'électrodes (110) et la languette de connexion en série (cT2) du deuxième ensemble d'électrodes (120) se chevauchent de manière à connecter électriquement le premier ensemble d'électrodes (110) et le deuxième ensemble d'électrodes (120).

9. La batterie secondaire au lithium (100) selon la revendication 8, dans laquelle aucun matériau actif d'électrode négative LTO n'est appliqué sur la languette d'électrode négative (aT2) du deuxième ensemble d'électrodes (120), et la languette d'électrode négative (aT2) du deuxième ensemble d'électrodes (120) s'étend depuis un côté du collecteur de courant d'électrode négative (123a) du deuxième ensemble d'électrodes (120), est connectée à une languette de connexion d'électrode négative (L2) et est utilisée comme borne d'électrode négative.

10. La batterie secondaire au lithium (100) selon la revendication 9, dans laquelle la languette d'électrode positive (cT1) du premier ensemble d'électrodes (110) et la languette d'électrode négative (aT2) du deuxième ensemble d'électrodes (120) sont configurées de manière à ne pas se chevaucher.
autre.

11. La batterie secondaire au lithium (100) selon la revendication 1, dans laquelle chacune des plaques d'électrode négative (113) du premier ensemble d'électrodes (110), des plaques d'électrode positive (111) du premier ensemble d'électrodes (110), la plaque d'électrode négative (123) du deuxième ensemble d'électrodes (120) et la plaque d'électrode négative (123) du deuxième ensemble d'électrodes (120) comprennent de l'aluminium, de l'acier inoxydable ou du cuivre.
